# EUROPÄISCHE PATENTSCHRIFT

(11) **EP 2 763 863 B1**
(45) Veröffentlichungstag und Bekanntmachung des Hinweises auf die Patenterteilung: **24.02.2016**
(21) Anmeldenummer: 12755857.5
(22) Anmeldetag: 04.09.2012
(51) Int. Cl.: B60G 17/027

(54) **FAHRZEUG-RADAUFHÄNGUNG MIT EINEM HYDRAULISCHEN SCHWINGUNGS-DÄMPFER**
VEHICLE WHEEL SUSPENSION WITH A HYDRAULIC VIBRATION DAMPER
SUSPENSION DE ROUE DE VÉHICULE POURVUE D'UN AMORTISSEUR DE VIBRATIONS HYDRAULIQUE

(30) Priorität: 06.10.2011 DE 102011084089
(43) Veröffentlichungstag der Anmeldung: 13.08.2014
(73) Patentinhaber: Bayerische Motoren Werke Aktiengesellschaft, 80809 München (DE)
(72) Erfinder: SCHMIDT, Roland, 82131 Stockdorf (DE); VOS, Serge, 80995 München (DE); KLEIN, Holger, 80809 München (DE)
(86) Internationale Anmeldenummer: PCT/EP2012/067169
(87) Internationale Veröffentlichungsnummer: WO 2013/050205

(56) Entgegenhaltungen:
- EP-A2- 0 148 060
- EP-A2- 1 477 343
- DE-A1- 10 121 918
- DE-A1- 10 306 157
- DE-A1- 10 324 993
- DE-A1-102004 019 991
- DE-A1-102010 007 237
- FR-A1- 2 726 791
- JP-A- 2006 131 066
- JP-A- 2007 030 665
- US-A- 5 211 420

## Beschreibung

Die Erfindung betrifft eine Fahrzeug-Radaufhängung mit einem einer den Fahrzeug-Aufbau anteilig abstützenden Tragfeder parallel geschalteten hydraulischen Schwingungs-Dämpfer, in welchem eine vorzugsweise und üblicherweise erst bei größeren Ausfeder-Wegen zur Wirkung kommende Zuganschlagfeder vorgesehen ist, deren Abstützpunkt gegenüber dem Dämpfer-Gehäuse mittels eines in diesem vorgesehenen und durch von außen mittels einer Pumpe mit Druck zugeführten Fluid verlagerbaren Federstütz-Kolbens verlagerbar ist. Zum Stand der Technik wird neben der DE 10 2004 019 991 A1, der als nächstliegender Stand der Technik angesehen wird, insbesondere auf die DE 101 21 918 B4 verwiesen.

In der soeben erstgenannten Schrift ist ein Schwingungsdämpfer einer Radaufhängung mit einer Zusatzfeder aus einem Elastomermaterial beschrieben, die der üblichen Tragfeder parallel geschaltet ist und deren Abstützung relativ zum Fahrzeug-Aufbau über eine ansteuerbare Kolbenanordnung in Bezug auf die Längsachse der Kolbenstange des Dämpfers, welche vorliegend im weiteren als Dämpferstange bezeichnet wird, verstellbar ist. Diese Verstellung erfolgt hydraulisch unter Förderung des Hydraulikmediums mit einer motorisch angetriebenen Pumpe, die insbesondere zur Darstellung einer hohen System-Dynamik von einem Hydraulik-Druckspeicher unterstützt sein kann. Mit einer solchen Verstellung der Zusatzfeder ist ein niveauregelnder Eingriff möglich, d.h. es soll der Fahrzeug-Aufbau je nach Bedarf angehoben oder abgesenkt werden können.

Auch in der eingangs zweitgenannten, gattungsbildenden DE 101 21 918 B4 ist ein Feder-Dämpfer-System mit federndem Anschlag beschrieben, wobei sowohl eine als Druckstufen-Anschlag wirkende und durch einen Elastomerkörper gebildete Zusatzfeder, als auch eine Zuganschlagfeder für die Zugstufe des Dämpfers mittels sog. Anschlagklolben derart beeinflussbar bzw. konkret innerhalb des Dämpfer-Gehäuses längs der Dämpferstange verlagerbar sind, dass der Wankneigung des Fahrzeug-Aufbaus gegenüber den Rädern in Kurvenfahrten entgegen gewirkt wird.

Vorliegend wurde erkannt, dass jedenfalls dann, wenn eine dem Dämpfer parallel geschaltete Tragfeder in Form einer üblichen mechanischen Schraubenfeder oder dgl. ausgebildet ist, alleine eine in der soeben erläuterten Schrift offenbarte Verlagerbarkeit der Zuganschlagfeder, welche bei einem stärkeren Ausfedern des Fzg.-Aufbaus gegenüber den Rädern, d.h. bei einer größeren Aufbau-Bewegung von der Fahrbahn weg zur Wirkung kommt, die Möglichkeit eröffnet, den Fahrzeug-Aufbau gezielt abzusenken, ohne dass hierfür wie in der DE 101 21 918 B4 angegeben eine Veränderung an der in dieser Schrift als Luftfeder ausgebildeten Tragfeder vorgenommen werden muss.

Hiermit soll nun für eine (solche) Fahrzeug-Radaufhängung nach dem Oberbegriff des Anspruchs 1 aufgezeigt werden, wie der zur Veränderung des Höhenstandes des Fahrzeug-Aufbaus über der Fahrbahn benötigte Energiebedarf der Pumpe gering gehalten werden kann oder wie, falls die Minimierung des Energiebedarfs nicht ein vorrangiges Ziel ist, eine solche Radaufhängung im Hinblick auf das Parkieren des Fahrzeugs besonders sicher gestaltet werden kann (= Aufgabe der vorliegenden Erfindung). Die Lösung dieser Aufgabe ist dadurch gekennzeichnet, dass die Pumpe mit einem Druckspeicher für das besagte Fluid verbunden ist und Fluid aus diesem Druckspeicher heraus in das Dämpfer-Gehäuse hinein oder aus dem Dämpfer-Gehäuse heraus zurück in den Druckspeicher fördert, wobei der Betrag der Federkonstante des Druckspeichers zumindest in der Größenordnung der Federkonstanten der zugeordneten Tragfeder oder im Falle mehrerer einem Druckspeicher zugeordneten Tragfedern mit zugehörigen Schwingungs-Dämpfern der Federkonstanten dieser Tragfedern oder darüber liegt.

Wenn ein Druckspeicher für das von einer Pumpe für eine gewünschte Verlagerung des Federstütz-Kolbens in das Dämpfer-Gehäuse mit Überdruck geförderte Fluid vorgesehen ist, aus welchem diese Pumpe das Fluid bereits unter Überdruck stehend bezieht, so wird naturgemäß für diese Fluid-Förderung weniger Energie benötigt als wenn die Pumpe das Fluid aus einem "drucklosen" Sammelbehälter absaugen muss. Zwar wird für den Druck-Aufbau im Druckspeicher ebenfalls Energie benötigt, jedoch kann hierfür bei vernünftiger Ansteuerung ein Teil der bei einer Ausfeder-Bewegung des Fahrzeug-Aufbaus in die Zuganschlagfeder gelangenden und dabei quasi freiwerdenden Leistung verwendet werden. Ferner ist der Zeitfaktor ein signifikanter Vorteil eines solchen Druckspeichers, indem mit Hilfe von dessen gespeicherter Energie eine gewünschte Verlagerung des Federstütz-Kolbens binnen einer relativ kurzen Zeitspanne dargestellt werden kann, während der neuerliche Druckaufbau im Druckspeicher zeitlich weiter gestreckt erfolgen kann, so dass die benötigte Förderleistung der Pumpe relativ gering gehalten werden kann.

Erfindungsgemäß liegt der Betrag der Federkonstanten des Druckspeichers zumindest in der Größenordnung der Federkonstanten der zugeordneten Tragfeder oder darüber. Ein Druckspeicher für ein Fluid weist stets ein Federelement im weitesten Sinne auf, welches beim Beladen des Druckspeichers mit einem unter Druck stehenden Fluid weiter gespannt wird. Beispielsweise kann es sich bei diesem Federelement um ein an einem verlagerbaren Kolben, welcher den Druckraum des Druckspeichers begrenzt, abgestütztes Schrauben-Druckfederelement handeln, alternativ ist auch ein Gasfedervolumen möglich. Selbstverständlich besitzt ein solches Federelement eines Druckspeichers eine definierte Federkonstante (auch Federrate oder Federsteifigkeit genannt). Wenn nun diese Federkonstante vom gleichen Betrag ist wie die Federrate der diesem Druckspeicher zugeordneten Tragfeder, über die der Fahrzeug-Aufbau anteilig auf dem jeweiligen Rad des Fahrzeugs abgestützt ist, so wird jedenfalls theoretisch für das Verlagern des im jeweiligen Schwingungsdämpfer vorgesehenen Federstütz-Kolbens im Sinne eines Spannens der in diesem vorgesehenen Zuganschlagfeder keine Pumpen-Leistung benötigt. Tatsächlich sind jedoch Reibungsverluste zu überwinden, für welche selbstverständlich eine geringe Pumpen-Leistung benötigt wird, jedoch ist diese dann relativ gering.

Bei der Erläuterung des vorhergehenden Absatzes wurde davon ausgegangen, dass einem erfindungsgemäßen Druckspeicher ein einziger Schwingungsdämpfer mit einem Federstütz-Kolben zugeordnet ist, welchem eine einzige Tragfeder zugeordnet ist, d.h. diese Erläuterung bezieht sich auf die Feder-Dämpfer-Einheit in der Radaufhängung eines einzigen Fahrzeug-Rades. Tatsächlich gilt jedoch gleiches auch für eine hinsichtlich des Bauaufwands optimierte Anordnung, bei der sämtlichen Rädern des Fahrzeugs (bei einem Personenkraftwagen sind dies die beiden Vorderräder und die beiden Hinterräder) ein einziger erfindungsgemäßer Druckspeicher zugeordnet ist. Zwar sind dann beispielsweise vier Tragfedern parallel zueinander angeordnet wirksam, jedoch sind gleichzeitig auch vier erfindungsgemäße Schwingungs-Dämpfer mit jeweils einem Federstütz-Kolben vorhanden, die ebenso zueinander parallel wirksam sind. Wenn also die Federkonstanten aller Tragfedern gleich sind, so bleibt eine solche Parallel-Schaltung dieser Tragfedern mit den jeweils zugeordneten Schwingungs-Dämpfern bezüglich eines einzigen zugehörigen Druckspeichers ohne Auswirkung, d.h. die im vorhergehenden Absatz erläuterten Zusammenhänge gelten unverändert auch hierfür. Aus diesem Grunde ist im kennzeichnenden Teil des unabhängigen Patentanspruchs davon die Rede, dass im Falle mehrerer einem Druckspeicher zugeordneten Tragfedern mit zugehörigen Schwingungs-Dämpfern der Betrag der Federkonstante des Druckspeichers zumindest in der Größenordnung der Federkonstanten dieser Tragfedern oder darüber liegt. Dabei gelten diese erläuterten Zusammenhänge auch dann, wenn sich die Federkonstanten der mehreren Tragfedern nur geringfügig voneinander unterscheiden. Sollten jedoch an einer Achse des Fahrzeugs signifikant härtere (oder weichere) Tragfedern (d.h. solche mit wesentlich höherer oder wesentlich niedrigerer Federkonstante) als an der anderen Achse des Fahrzeugs verbaut sein, so könnte es empfehlenswert sein, für jede dieser Achsen des Fahrzeugs einen eigenen erfindungsgemäßen Druckspeicher vorzusehen.

Bislang wurde lediglich der Vorteil erläutert, der sich aus einem im Wesentlichen gleichen Betrag der Federkonstanten des Druckspeichers und der Federkonstanten Federkonstanten der zugeordneten Tragfeder(n) ergibt. Wenn - was vorliegend ebenfalls beansprucht wird - der Betrag der Federkonstanten des Druckspeichers größer als die Federkonstante der diesem Druckspeicher zugeordneten Tragfeder(n) ist, so ist eine Sicherheits-Funktion geschaffen, mit Hilfe derer bei geeigneter Schaltung von einem in der hydraulischen (bzw. allgemein fluidischen) Verbindung zwischen dem Druckspeicher und einem im Dämpfer-Gehäuse vorgesehenen und vom Federstütz-Kolben begrenzten Raum (sog. Abstützraum) vorgesehenem Ventil gewährleistet werden kann, dass der Fzg.-Aufbau mit abgestelltem Fahrzeug in seine vollständig abgesenkte Position gelangt und diese bis zur Wiederinbetriebnahme des Fahrzeugs auch beibehält, was beispielsweise in niedrigen Garagen oder auf Decks von Fährschiffen mit geringer Raumhöhe erforderlich sein kann. Dabei muss dieses genannte Ventil lediglich geöffnet sein und bleiben und somit eine fluidische Verbindung zwischen dem Druckspeicher und dem besagten Abstütz-Raum im Dämpfer-Gehäuse ermöglichen, was beispielsweise mit einem stromlos offenen Elektromagnet-Ventil (oder einem beliebigen bistabilen Ventil) einfach und ohne Energiebedarf darstellbar ist.

Im Sinne einer vorteilhaften Weiterbildung kann der genannte Federstütz-Kolben, der im Dämpfer-Gehäuse verlagerbar einen mit dem besagten Fluid befüllbaren Abstützraum begrenzt, durch ein vorzugsweise an der Zuganschlagfeder abgestütztes Federelement in einer solchen Ausgangsposition gehalten sei, dass das Volumen des im wesentlichen Umgebungsdruck aufweisenden Abstützraumes minimiert ist. Mit einer beabsichtigten Verlagerung dieses Federstütz-Kolbens und einem dafür erforderlichen Aufbau von Überdruck im besagten Abstützraum muss dann zwar die Kraft dieses genannten Federelements überwunden werden, jedoch kann der hierfür nötige Energiebedarf relativ gering gehalten werden, wenn die Federkraft dieses Federelements so gering als möglich gewählt wird.

Quasi als Betriebsverfahren wird für eine erfindungsgemäße Radaufhängung weiterhin vorgeschlagen, dass ein mit dem Fluid (als welches ausdrücklich neben einem Hydraulik-Medium auch ein gasförmiges Medium und vorzugsweise Luft verwendet werden kann) befüllbarer Abstützraum im Dämpfer-Gehäuse, über welchen der Federstütz-Kolben abgestützt ist, stets dann, wenn der Höhenstand des Fahrzeug-Aufbaus nicht durch gezielte Vorspannung der Zuganschlagfeder verändert werden soll, durch Rückfördern von Fluid mittels der Pumpe in den Druckspeicher im wesentlich frei von Überdruck gestellt wird. Damit werden Reibungsverluste im Schwingungs-Dämpfer möglichst gering gehalten. Dabei sollte jedoch sichergestellt sein, dass kein Unterdruck im Abstützraum erzeugt wird, um insbesondere bei Verwendung eines Hydraulikmediums als Fluid ein unerwünschtes Eindringen bzw. Ansaugen von Luft über Kolbendichtungen oder dgl. zu vermeiden. Insbesondere hierfür kann ein entsprechendes Ventil in der Leitung vom Abstützraum zur Saugseite der Pumpe vorgesehen sein, welches diese Leitung bei Vorliegen von Umgebungsdruck im Abstützraum und gleichzeitigem Saugbetrieb der Pumpe absperrt. Alternativ kann hierzu ein sog. Kompensationsvolumen vorgesehen sein, welches ebenso verhindern kann, dass bei Entleeren des Abstützraums Umgebungsluft in den Dämpfer gesaugt wird.

Die beigefügte Prinzipskizze zeigt ein Ausführungsbeispiel der vorliegenden Erfindung, wobei neben einem im Schnitt dargestellten erfindungsgemäßen Schwingungs-Dämpfer eine diesem bzw. dessen sog. Abstützraum zugeordnete Pumpe mit einem Druckspeicher und Ventilen abstrahiert gezeigt ist. Erfindungswesentlich können dabei sämtliche näher erläuterten Merkmale sein.

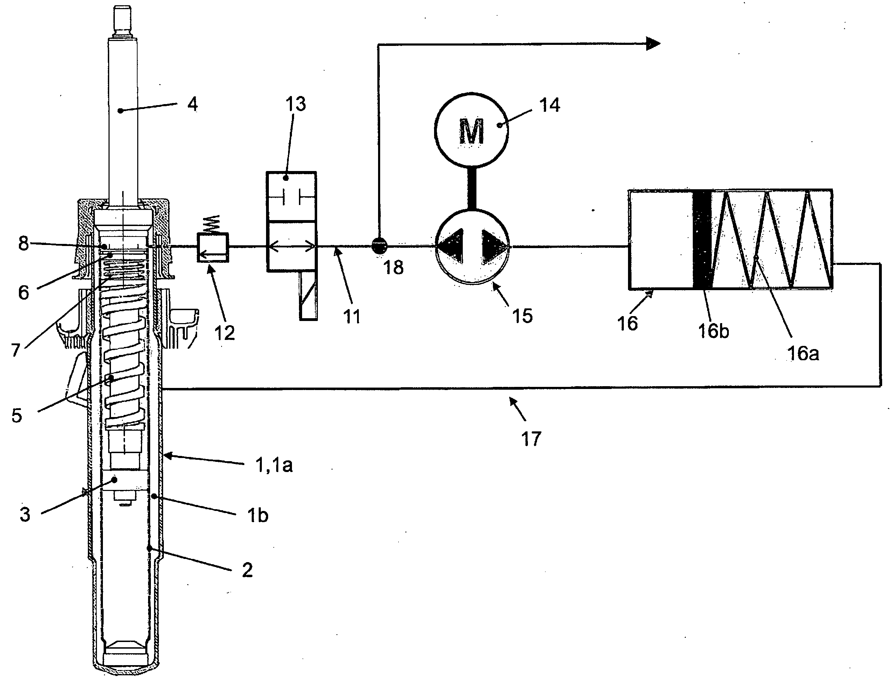

Mit der Bezugsziffer 1 ist ein Schwingungs-Dämpfer in der Aufhängung eines Rades eines Fahrzeugs (bspw. Personenkraftwagens) gekennzeichnet, dem eine nicht dargestellte Tragfeder, über welche der Fzg.-Aufbau anteilig auf diesem Rad abgestützt ist, parallel geschaltet ist. Innerhalb des Gehäuses 1a dieses Schwingungsdämpfers befindet sich der eigentliche Dämpfer-Zylinder 2, innerhalb dessen wie üblich ein Dämpferkolben 3 verschiebbar geführt ist, der von einer Dämpferstange 4 getragen wird. Mit seinem in der Figur unteren Endabschnitt ist das Dämpfer-Gehäuse 1a an einem radführenden Element der Radaufhängung befestigt, während das obere freie Ende der Dämpferstange 4 am Fahrzeug-Aufbau befestigt ist. Das Wirkprinzip eines bzw. des soweit beschriebenen Dämpfers 1 ist dem Fachmann bekannt und muss daher nicht weiter erläutert werden.

Ebenso wie grundsätzlich bekannt ist in diesem Schwingungs-Dämpfer 1 eine Zuganschlagfeder 5 vorgesehen, die bei einer größeren Ausfeder-Bewegung zwischen Rad und Fzg.-Aufbau zur Wirkung kommt, also dann, wenn die Dämpferstange 4 (in der sog. Zugstufe) um ein größeres Maß aus dem Dämpfer-Zylinder 2 bzw. aus dem Dämpfer-Gehäuse 1a heraus gefahren wird. Selbstverständlich enthält der vorliegende Schwingungs-Dämpfer 1 auch eine Druckanschlagfeder, die in der sog. Druckstufe zur Wirkung kommen kann, jedoch ist diese der Übersichtlichkeit wegen vorliegend nicht dargestellt.

Die als Schrauben-Druckfeder ausgebildete Zuganschlagfeder 5 ist mit ihrem in der Figur unteren Ende am Dämpferkolben 3 befestigt und abgestützt. Am gegenüberliegenden in der Figur oberen Ende der Zuganschlagfeder 5 ist ein weiteres als Schraubendruckfeder ausgebildetes Federelement 7 abgestützt, auf dessen anderem Ende ein sog. Federstütz-Kolben 6 aufliegt, der verlagerbar im Dämpfer-Zylinder 2 geführt ist. Auf die Funktion dieses nicht unbedingt erforderlichen Federelements 7 wird später noch kurz eingegangen.

Auf der dem genannten Federelement 7 und der Zuganschlagfeder 5 abgewandten Seite des Federstütz-Kolbens 6 ist im in der Figurendarstellung nach oben hin geschlossenen Dämpfer-Zylinder 2 ein sog. Abstützraum 8 vorgesehen, der über eine die Wand des Dämpfer-Zylinders 2 sowie des Dämpfer-Gehäuses 1 a durchdringende Fluidleitung 11 mit einem Fluid, insbesondere einem Hydraulikmedium, befüllbar ist. In Abhängigkeit vom in diesem Abstützraum 8 herrschenden Fluiddruck kann dann der Federstütz-Kolben 6 gegenüber der Dämpferstange 4 und in Richtung von deren Längsachse in der Figurendarstellung nach unten verlagert werden, wobei mit entsprechend hohem Fluiddruck im Abstützraum 8 die Zuganschlagfeder 5 gegenüber dem figürlich dargestellten Zustand auch komprimiert werden kann. Wird bei ansonsten unveränderten Randbedingungen die Zuganschlagfeder 5 solchermaßen komprimiert, so wird hierdurch in die Radaufhängung des Fahrzeugs eine Kraft eingeleitet, welche zur Folge hat, dass der Dämpferkolben 3 und die Dämpferstange 4 in der Figurendarstellung nach unten weiter in den Dämpfer-Zylinder 2 hinein geschoben wird, so dass hiermit der Fahrzeug-Aufbau zur Fahrbahn hin abgesenkt wird.

Im weiteren wird nun auf die mit dem Abstützraum 8 verbundene Fluidleitung 11 und die darin enthaltenen bzw. an diese angekoppelten Elemente eingegangen: Ausgehend vom Abstützraum 8 ist in dieser Fluidleitung 11 zunächst ein nicht zwingend erforderliches Druckbegrenzungsventil 12 vorgesehen, auf dessen Funktion später noch kurz eingegangen wird. Darauf folgt ein in der Fluidleitung 11 vorgesehenes 2/2-Wegeventil in Form eines stromlos offenen (oder bistabilen) Elektromagnetventils, welches auch als einfaches Schwarz-Weiß-Ventil bzw. Auf-Zu-Ventil bezeichnet werden kann und mit der Bezugsziffer 13 gekennzeichnet ist. Dessen Funktion könnte auch von einem beliebigen anderen schaltbaren Ventil übernommen werden. Zwischen diesem Ventil 13 und einer von einem Elektromotor 14 angetriebenen Pumpe 15 mit umkehrbarer Förderrichtung ist ein Abzweig 18 zu den nicht dargestellten weiteren baugleichen Schwingungs-Dämpfern der anderen Fahrzeug-Räder vorgesehen, denen jeweils gleiche Ventile 12, 13 vorgeschaltet sind. Mit ihrem bezüglich der Pumpe 15 dem Abstützraum 8 des Dämpfers 1 gegenüberliegenden Ende mündet die Fluidleitung 11 schließlich in einem Druckspeicher 16 für das Fluid bzw. Hydraulikmedium, der wie bei Druckspeichern üblich ein vorgespanntes Federelement 16a enthält, das vorliegend an einem den Fluid-Druckraum des Druckspeichers 16 begrenzenden und in einem Zylinder verlagerbaren Druckspeicher-Kolben 16b abgestützt ist. (Alternativ zu einem solchen Druckspeicher mit einem bzw. dem Federelement 16a kann auch ein Druckspeicher mit einer Gasfeder verwendet werden).

Wie vor der Figurenbeschreibung erläutert wurde, kann der Fahrzeug-Aufbau eines mit einer erfindungsgemäßen Radaufhängung ausgerüsteten Fahrzeugs in Richtung Fahrbahn abgesenkt werden, wenn mit der Pumpe 15 aus dem Druckspeicher 16 bei geöffnetem Schwarz-Weiß-Ventil 13 durch das Druckbegrenzungsventil 12 hindurch eine ausreichende Menge von Fluid (vorzugsweise ein Hydraulikmedium) unter ausreichendem Druck in den Abstützraum 8 gefördert wird. Mit Rückförderung von Hydraulik-Fluid aus dem Abstützraum 8 zurück in den Druckspeicher 16 (ebenfalls durch die Pumpe 15) wird der Fahrzeug-Aufbau unter Einwirkung der sich damit entspannenden Zuganschlagfeder 5 wieder angehoben. Wie vor der Figurenbeschreibung ausführlich erläutert wurde, ist der Betrag der Federkonstante des Federelements 16a des Druckspeichers 16 (und kurz gesagt die Federkonstante des Druckspeichers 16) zumindest annähernd so groß wie die Federkonstante der Tragfedern der Fahrzeug-Räder.

Das Druckbegrenzungsventil 12 ist dabei so ausgelegt, dass beim Absaugen von Hydraulikmedium durch die Pumpe 15 aus dem Abstützraum 8 in diesem Abstützraum 8 kein nennenswerter Unterdruck entstehen kann. Sollte also bei einem Absaugvorgang von Hydraulik-Fluid aus dem Abstützraum 8 die Gefahr einer Bildung von Unterdruck (gegenüber dem Umgebungsdruck) im Abstützraum 8 bestehen, so schließt dieses Druckbegrenzungsventil 12 selbsttätig.

Was das zwischen dem dem Dämpferkolben 3 abgewandten Ende der Zuganschlagfeder 5 und dem Federstütz-Kolben 6 eingespannte Druck-Federelement 7 betrifft, so dient dieses dazu, den Federstütz-Kolben 6 dann, wenn im Abstützraum i wesentlichen Umgebungsdruck herrscht (und somit das zuvor in diesen hinein geförderte Hydraulik-Fluid abgezogen wurde oder ist) in eine definierte Ausgangsposition zurück zu bewegen, mit welcher das Volumen des Abstützraumes 8 minimal ist.

Im übrigen ist vorliegend das innerhalb des Dämpfer-Gehäuses 1a und außerhalb des Dämpfer-Zylinders 2 liegende Öl-Vorratsvolumen 1b des SchwingungsDämpfers 1 über eine Druckentlastungsleitung 17 mit der drucklosen Seite des Druckspeichers 16 verbunden, jedoch kann dies sowie eine Vielzahl weiterer Details insbesondere konstruktiver Art durchaus abweichend von obigen Erläuterungen gestaltet sein, ohne den Inhalt der Patentansprüche zu verlassen. Insbesondere sei darauf hingewiesen, dass beim vorliegenden Ausführungsbeispiel der Dämpfer-Kolben 3 in einem Dämpfer-Zylinder 2 geführt ist, in welchem auch der Federstütz-Kolben 6 geführt ist, so dass sich der Abstützraum 8 zumindest anteilig im Dämpfer-Zylinder 2 befindet, dass jedoch alternativ jedenfalls der Feder-Stütz-Kolben 6 auch direkt im Dämpfer-Gehäuse 1a verlagerbar geführt sein kann, weshalb vorliegend nicht nur davon gesprochen wird, dass dieser bzw. die daran abgestützte Zuganschlagfeder 5 Federstütz-Kolben 6 über den Abstützraum 8 letztlich am Dämpfer-Gehäuse 1a abgestützt ist, sondern auch davon gesprochen wird, dass das Hydraulik-Fluid, welches durch die Pumpe 15 dem Abstützraum 8 zugeführt wird, in das Dämpfer-Gehäuse 1a hinein gefördert wird.

## Patentansprüche

1. Fahrzeug-Radaufhängung mit einem einer den Fahrzeug-Aufbau anteilig abstützenden Tragfeder parallel geschalteten hydraulischen Schwingungs-Dämpfer (1), in welchem eine vorzugsweise und üblicherweise erst bei größeren Ausfeder-Wegen zur Wirkung kommende Zuganschlagfeder (5) vorgesehen ist, deren Abstützpunkt gegenüber dem Dämpfer-Gehäuse (1a) mittels eines in diesem vorgesehenen und durch von außen mittels einer Pumpe (15) mit Druck zugeführten Fluid verlagerbaren Federstütz-Kolbens (6) verlagerbar ist,
**dadurch gekennzeichnet, dass** die Pumpe (15) mit einem Druckspeicher (16) für das besagte Fluid verbunden ist und Fluid aus diesem Druckspeicher (16) heraus in das Dämpfer-Gehäuse (1 a) hinein oder aus dem Dämpfer-Gehäuse (1a) heraus zurück in den Druckspeicher (16) fördert, wobei der Betrag der Federkonstanten des Druckspeichers (16) zumindest in der.Größenordnung der Federkonstanten der zugeordneten Tragfeder oder im Falle mehrerer einem Druckspeicher (16) zugeordneten Tragfedern der Federkonstanten dieser Tragfedern oder darüber liegt.

2. Fzg.-Radaufhängung nach Anspruch 1, **dadurch gekennzeichnet, dass** der einen mit dem besagten Fluid befüllbaren Abstützraum (8) begrenzende Federstütz-Kolben (6) durch ein vorzugsweise an der Zuganschlagfeder (5) abgestütztes Federelement (7) in einer das Volumen des im wesentlichen Umgebungsdruck aufweisenden Abstützraumes (8) minimierenden Ausgangsposition gehalten ist.

3. Betriebsverfahren für eine Fahrzeug-Radaufhängung nach Anspruch 1 oder 2, **dadurch gekennzeichnet, dass** ein mit dem Fluid befüllbarer Abstützraum (8) im Dämpfer-Gehäuse (1a), über welchen der Federstütz-Kolben (6) abgestützt ist, stets dann, wenn der Höhenstand des Fahrzeug-Aufbaus nicht durch gezielte Vorspannung der Zuganschlagfeder (5) verändert werden soll, durch Rückfördern von Fluid mittels der Pumpe (15) in den Druckspeicher (16) im wesentlich frei von Überdruck und Unterdruck gestellt wird.

## Claims

1. A vehicle wheel suspension with a hydraulic vibration damper (1) which is connected in parallel to a suspension spring proportionally supporting the vehicle body and in which a buffer spring (5) is provided which preferably and usually only comes into effect in the event of a relatively great rebound travel and the support point thereof with respect to the damper housing (1a) is displaceable by means of a spring-supported piston (6) which is provided therein and is displaceable by fluid supplied with pressure from outside by a pump (15), **characterised in that** the pump (15) is connected to a pressure accumulator (16) for said fluid and conveys fluid out of this pressure accumulator (16) into the damper housing (1a) or out of the damper housing (1a) back into the pressure accumulator (16), the value of the spring constant of the pressure accumulator (16) being at least of the order of magnitude of the spring constant of the associated suspension spring or, in the case of a plurality of suspension springs associated with one pressure accumulator (16), of the spring constants of these suspension springs or thereabove.

2. A vehicle wheel suspension according to claim 1, **characterised in that** the spring-supported piston (6) defining a support chamber (8) which can be filled with said fluid is held in a starting position which minimises the volume of the support chamber (8) substantially having ambient pressure by a spring element (7) which is preferably supported on the buffer spring.(5).

3. An operating method for a vehicle wheel suspension according to claim 1 or claim 2, **characterised in that** a support chamber (8), fillable with the fluid, in the damper housing (1a) by which chamber the spring-supported piston (6) is supported, is always set to be substantially free from excess pressure and vacuum by recirculating fluid into the pressure accumulator (16) by the pump (15) if the ride height of the vehicle body is not to be changed by a specific pretensioning of the buffer spring (5).

## Revendications

1. Suspension de roue de véhicule comprenant un amortisseur d'oscillations hydraulique (1) monté parallèlement à un ressort d'appui supportant proportionnellement la carrosserie du véhicule, et dans lequel il est prévu un ressort de butée de traction (5) venant en action de préférence et classiquement uniquement en présence de grandes courses de débattement et, dont le point d'appui contre le boîtier d'amortisseur (1a) peut être déplacé au moyen d'un piston d'appui élastique (6) monté dans celui-ci et déplaçable par un fluide alimenté en pression par l'extérieur au moyen d'une pompe (15),
**caractérisé en ce que**
la pompe (15) est reliée à un accumulateur de pression (16) pour le fluide et refoule le fluide de cet accumulateur de pression (16) dans le boîtier d'amortisseur (1a) ou le retourne de ce boîtier d'amortisseur (1a) vers l'accumulateur de pression (16), la valeur de la constante de rappel de l'accumulateur de pression (16) étant au moins de l'ordre de grandeur de la constante de rappel du ressort d'appui associé ou supérieure ou en cas de plusieurs ressorts d'appui associés à un accumulateur de pression (16) au moins de l'ordre de grandeur des constantes de rappel de ces ressorts d'appui ou supérieure.

2. Suspension de roue de véhicule conforme à la revendication 1,
**caractérisée en ce que**
le piston d'appui élastique (6) délimitant une chambre d'appui (8) pouvant être remplie par le fluide est maintenu par un élément élastique (7) s'appuyant de préférence contre le ressort de butée de traction (5) dans une position de départ minimisant le volume de la chambre d'appui (8) présentant essentiellement la pression de l'environnement.

3. Procédé de gestion d'une suspension de roue de véhicule conforme à la revendication 1 ou 2,
**caractérisé en ce qu'**
une chambre d'appui (8) pouvant être remplie par le fluide, située dans le boîtier d'amortisseur (1a), sur laquelle s'appuie le piston d'appui élastique (6) est réglée de façon à être essentiellement exempte de surpression et de dépression par retour de fluide dans l'accumulateur de pression (16) au moyen de la pompe (15) lorsque la position en hauteur de la carrosserie du véhicule ne doit pas être modifiée par une précontrainte ciblée du ressort de butée de traction (5).
